# EUROPÄISCHE PATENTSCHRIFT

(11) **EP 1 146 246 B1**
(45) Veröffentlichungstag und Bekanntmachung des Hinweises auf die Patenterteilung: **19.07.2006**
(21) Anmeldenummer: 01105502.7
(22) Anmeldetag: 05.03.2001
(51) Int. Cl.: F16F 9/05, B21D 26/02

(54) **Abrollkolben für Luftfedersysteme**
Piston for rolling lobe air spring systems
Piston de déroulage pour systèmes de ressort pneumatique

(30) Priorität: 12.04.2000 DE 10018238
(43) Veröffentlichungstag der Anmeldung: 17.10.2001
(73) Patentinhaber: Hydro Aluminium Alutubes GmbH, 30453 Hannover (DE)
(72) Erfinder: Schulze, Torsten, 31515 Wunstorf (DE); Steimmel, Franz, 53619 Rheinbreitbach (DE); Optiz, Michael, 31855 Aerzen (DE); Wähner, Frank, 30457 Hannover (DE)
(74) Vertreter: Cohausz & Florack

(56) Entgegenhaltungen:
- EP-A- 0 548 859
- EP-A- 0 679 815

## Beschreibung

Die Erfindung betrifft einen Abrollkolben für Luftfedersysteme gemäß dem Oberbegriff des Patentanspruchs 1.

Luftfedersysteme werden insbesondere im Automobilbereich eingesetzt, z. B. zur Federung bei Personenkraftwagen oder auch zur Federung der Fahrerkabinen bei Lastkraftfahrzeugen. Das charakteristische Merkmal von Luftfedersystemen besteht darin, daß unter Druck stehende Luft als Federelement verwendet wird.

Ein wichtiger Bestandteil eines Luftfedersystems ist der Abrollkolben, auf dessen äußerer Oberfläche ein Rollbalg aus Gummi abrollt, wenn das Luftfedersystem beansprucht wird und einen Federvorgang durchführt. Der Abrollkolben positioniert bzw. stützt den Rollbalg faltenfrei ab. Außerdem beeinflußt die Geometrie des Abrollkolbens die Federkennlinie des Luftfedersystems, und zwar durch Auswahl unterschiedlicher Durchmesser des Abrollkolbens.

Beim Zusammenbau eines Luftfedersystems wird der Abrollkolben in die Systembauteile eingepaßt, und aus diesem Grunde besteht die Forderung nach einer hohen Genauigkeit und minimalen Toleranzen für den Abrollkolben. Auch unter dem Gesichtspunkt, daß der Abrollkolben ständigen Druckschwankungen durch die Federung ausgesetzt ist, wobei die Druckschwankungen noch durch dynamisch wirkende Axialkräfte überlagert sind, wird eine hohe Genauigkeit gefordert.

Als Abrollkolben für Luftfedersysteme werden üblicherweise Rohre verwendet, und es ist bekannt, diese Rohre sowohl aus Stahl als auch aus Aluminium herzustellen.

Sofern Stahlrohre zum Einsatz kommen, sind diese längsnahtgeschweißt und gezogen. Mit solchen Stahlrohren lassen sich zwar die an einen Abrollkolben zu stellenden Anforderungen insbesondere hinsichtlich ihrer dynamischen Eigenschaften zufriedenstellend erfüllen, nachteilig ist allerdings, daß die Stahlrohre ein relativ hohes Gewicht besitzen.

Man ist deshalb bemüht, Rohre aus Aluminium zu verwenden, die wesentlich leichter sind. Die Gewichtsersparnis bei Verwendung von Aluminiumrohren liegt gegenüber Stahlrohren immerhin bei etwa 30 %. Bei Kraftfahrzeugen besteht allgemein die Tendenz zur Gewichtseinsparung bei dynamisch belasteten Teilen, weil dann auch alle weiteren Bestandteile, deren Auslegung durch die Fahrzeugmasse beeinflußt wird, leichter dimensioniert werden können. Somit geht das Bestreben dahin, Aluminium zu verwenden, insbesondere, wenn dadurch gleichzeitig die für den Fahrkomfort sehr wichtigen ungefederten Massen, zu denen der Abrollkolben gehört, reduziert werden können.

Die bekannten aus Aluminium bestehenden Abrollkolben sind durch stranggepreßte Halbzeuge gebildet. Wegen der bei Abrollkolben aus den eingangs geschilderten Gründen der generell geforderten Genauigkeit müssen die bekannten Aluminiumrohre gezogen werden. Wenn bei Abrollkolben enge Fertigungstoleranzen wegen der Abdichtung gegen Luftverlust im Vordergrund stehen, woraus sich die angesprochene hohe Genauigkeit als Anforderung ergibt, dann bezieht sich diese Genauigkeit sowohl auf die Einhaltung des Außen- als auch des Innendurchmessers und der Wanddicke des Aluminiumrohres. Wegen der Toleranzen im Bereich von wenigen Hundertsteln mm am eingepaßten Bauteil, bedingt durch Abdichtungsprobleme, aber auch durch akustische Probleme im Fall von nicht aufgepreßten Abrollkolben, werden hohe Anforderungen an die Genauigkeit des eingesetzten Halbzeuges gestellt.

Daneben ist auch eine sehr glatte Außenoberfläche erforderlich, da es sonst zum Verschleiß des ständig auf der Oberfläche abrollenden Rollbalges kommt.

Schließlich besteht aus Gründen einer weiteren Gewichtseinsparung noch die Forderung nach geringen Wanddicken des Rohres für einen Abrollkolben. Die Herstellung entsprechender stranggepreßter Aluminiumrohre mit solchen geringen Wanddicken ist jedoch nur durch einen nachgeschalteten Rohrziehprozeß möglich. Dies bedeutet allerdings einen hohen fertigungstechnischen Aufwand.

Somit stehen dem gewünschten Einsatz des Werkstoffes Aluminium bei Abrollkolben für Luftfedersysteme immer noch gravierende Nachteile entgegen, und die bekannten stranggepreßten und gezogenen Aluminiumrohre müssen wegen der angesprochenen Forderungen bezüglich Genauigkeit, Wanddicken und minimalen Toleranzen als sehr aufwendig und teuer eingestuft werden.

Neben stranggepreßten Aluminiumrohren sind an sich auch schon längsnahtgeschweißte Rohre aus Aluminiumlegierungen bekannt. So ist in der deutschen Offenlegungsschrift DE 41 42 325 Al ein Verfahren zum Herstellen von Fahrwerksträgern für Fahrzeuge, insbesondere Personenkraftwagen, aus Aluminiumlegierungen beschrieben. Den Ausgangspunkt bildet dabei der Umstand, daß in den Fällen, in denen die bisherigen stranggepreßten Aluminiumrohre zu Fahrwerksteilen von Kraftfahrzeugen verarbeitet werden, eine Vielzahl von Umformungsschritten notwendig ist, zu denen auch das Hydroumformen oder Innenhochdruckumformverfahren zählt.

Wie in der genannten Offenlegungsschrift DE 41 42 325 A1 beschrieben ist, haftet den bekannten stranggepreßten Aluminiumrohren der Nachteil an, daß eine Hydroumformung bei vorangegangenen anderen Umformungen nicht möglich ist, da das Umformvermögen des Werkstoffes aufgrund der vorangegangenen Umformungen erschöpft ist. Auch ist es nicht möglich, vor dem Hydroumformen zwischenzuglühen, da der Werkstoff entweder, bei niedrigen Glühtemperaturen, aushärtet oder, bei höheren Glühtemperaturen, sehr weich wird und somit seine Festigkeit verliert, ohne die Möglichkeit; diese durch weitere Wärmebehandlung wieder anzuheben.

Um vor diesem Hintergrund gleichwohl ein Ausgangsmaterial zum Herstellen von Fahrwerksträgern aus Aluminiumlegierungen zu finden, mit welchem die notwendigen Umformschritte problemlos durchgeführt werden können, wird in der genannten Offenlegungsschrift DE 41 42 325 A1 ein Verfahren vorgeschlagen, bei welchem als Rohlinge längsnahtgeschweißte Rohre aus einer naturharten oder aushärtbaren Aluminumlegierung verwendet werden.

Die vorliegende Erfindung befaßt sich demgegenüber jedoch nicht mit der Problematik, eine Vielzahl von Umformungsschritten zu ermöglichen sowie ein Zwischenglühen vor dem Hydroumformen vorzusehen.

Der Erfindung liegt die Aufgabe zugrunde, einen Abrollkolben aus Aluminium für Luftfedersysteme zu schaffen, welcher sich trotz der wegen der dynamischen Eigenschaften geforderten Genauigkeiten und engen Toleranzen wirtschaftlich und kostengünstig herstellen läßt, um somit den an sich vorteilhaften Werkstoff Aluminium auch bei Abrollkolben einsetzen zu können.

Die Lösung dieser Aufgabe erfolgt bei dem im Oberbegriff des Patentanspruchs 1 angegebenen Abrollkolben durch die Merkmale des kennzeichnenden Teils des Patentanspruchs 1.

Während für Abrollkolben bisher längsnahtgeschweißte Stahlrohre verwendet wurden, sieht die Erfindung vor, die Abrollkolben durch ein längsnahtgeschweißtes Rohr zu bilden, welches aus einer Aluminiumlegierung besteht.

Die Ausbildung des Abrollkolbens in Form eines längsnahtgeschweißten Aluminiumrohres ist von besonderem Vorteil. Neben der im Vergleich zu Stahlrohren erzielbaren Gewichtsersparnis sind insbesondere die mit längsnahtgeschweißten Aluminiumrohren erzielbaren Genauigkeiten und engen Toleranzen zu erwähnen, die sich zudem im Vergleich zu den bisher bekannten Abrollkolben kostengünstig und wirtschaftlich herstellen lassen.

Gemäß einer ersten Weiterbildung der Erfindung ist das Rohr ohne Zusatzwerkstoffe längsnahtgeschweißt.

In zweckmäßiger Ausgestaltung der Erfindung ist die Aluminiumlegierung durch eine naturharte Legierung gebildet.

Der Schritt, die Abrollkolben erfindungsgemäß als längsnahtgeschweißtes Rohr aus einer naturharten Aluminiumlegierung auszubilden, ist als überraschende Maßnahme anzusehen, da dem Fachmann bekannt ist, daß naturharte Aluminiumlegierungen höherer Festigkeit bei höheren Temperaturen etwa ab 60 °C zu Korrosionen neigen. Solche hohen Temperaturwerte sind aber bei Abrollkolben durchaus gängig. Sie entstehen im Betrieb durch Wärmeeinstrahlung vom Motor, vom Getriebe, vom Auspuffkrümmer und von den Bremsen.

Der Nachteil der erwähnten Korrosionen besteht darin, daß darunter die Dauerfestigkeit des Materials erheblich leiden kann, was bei Abrollkolben jedoch aus Sicherheitsgründen nicht zulässig ist. In Versuchen konnte allerdings festgestellt werden, daß bei den erfindungsgemäßen längsnahtgeschweißten Aluminiumrohren die Gefahr einer verringerten Dauerfestigkeit nicht gegeben ist. Somit wurde durch die erfindungsgemäßen Maßnahmen in überraschender Weise ein Vorurteil der Fachwelt überwunden.

Außerdem bestanden bisher beim Fachmann unter dem Gesichtspunkt der Schweißnahtsicherheit bei längsnahtgeschweißten Aluminiumrohren auch erhebliche Bedenken bei den dynamischen Belastungen, denen Abrollkolben ausgesetzt sind, längsnahtgeschweißte Aluminiumrohre zu verwenden. Die Schweißnahtsicherheit ist nämlich ein bedeutender Faktor im Hinblick auf die bei dynamisch stark belasteten Teilen zu fordernde mechanische Festigkeit. Deshalb ist beim Stand der Technik der Einsatz von längsnahtgeschweißten Aluminiumrohren auch vorzugsweise lediglich bei statisch belasteten Bauteilen erfolgt. Bei dynamisch belasteten Teilen sind zwar auch schon Aluminiumrohre eingesetzt worden, dabei handelt es sich jedoch stets um stranggepreßte und nicht um längsnahtgeschweißte Aluminiumrohre.

Bei der Erfindung ist es im Hinblick auf die Abrollkolben von Vorteil, daß ohne Zusatzwerkstoffe längsnahtgeschweißte Rohre hinsichtlich der Wandstärke wesentlich genauer und mit kleineren Toleranzen behaftet sind, als stranggepreßte Rohre. Auch die Gewichtsschwankungen der längsnahtgeschweißten Rohre sind über ihre Länge gesehen deutlich geringer als bei stranggepreßten Rohren aus Aluminium, was sich vorteilhaft auf die dynamischen Eigenschaften auswirkt.

Gemäß einer zweckmäßigen Ausgestaltung der Erfindung weist die Schweißnaht des Rohres eine Nahtüberhöhung zwischen - 0,1 und + 0,1 mm auf. In an sich bekannter Weise kann bei der Herstellung des erfindungsgemäßen Abrollkolbens das Hochfrequenzinduktions-Schweißen (HFI-Schweißen) angewendet werden, wobei keine Zusatzwerkstoffe für den Schweißvorgang benötigt werden. Gleichwohl bildet sich dabei eine Schweißnaht aus, die eine Verdickung der Wandstärke des Aluminiumrohres darstellt.

Diese als Nahtüberhöhung bezeichnete Verdickung der Schweißnaht wird anschließend in der angegebenen Toleranzbreite von - 0,1 und + 0,1 mm entfernt, d. h., im Bereich der Schweißnaht wird noch eine Verdickung von + 0,1 mm zugelassen, und andererseits ist es auch noch zulässig, wenn bei der Entfernung der Nahtüberhöhung zuviel Material abgetragen wird und sich dabei eine Verringerung der Wandstärke des Rohres von 0,1 mm ergibt.

Weitere zweckmäßige Ausgestaltungen der Erfindung ergeben sich aus den Unteransprüchen.

## Patentansprüche

1. Abrollkolben für Luftfedersysteme, wobei der Abrollkolben nach Art eines Rohres ausgebildet ist und aus Aluminium besteht,
**dadurch gekennzeichnet, daß** der Abrollkolben ein längsnahtgeschweißtes Rohr ist, welches aus einer Aluminiumlegierung besteht.

2. Abrollkolben nach Anspruch 1,
**dadurch gekennzeichnet, daß** das Rohr ohne Zusatzwerkstoffe längsnahtgeschweißt ist.

3. Abrollkolben nach Anspruch 1 oder 2,
**dadurch gekennzeichnet, daß** die Aluminiumlegierung durch eine naturharte Legierung gebildet ist.

4. Abrollkolben nach einem der Ansprüche 1 bis 3,
**dadurch gekennzeichnet, daß** die Wandstärke des Rohres 1,5 mm beträgt.

5. Abrollkolben nach einem der Ansprüche 1 bis 4,
**dadurch gekennzeichnet, daß** das längsnahtgeschweißte Rohr durch Einzieh- und Aufweitoperationen in die Geometrie des Abrollkolbens umgeformt ist.

6. Abrollkolben nach einem der Ansprüche 1 bis 4,
**dadurch gekennzeichnet, daß** das längsnahtgeschweißte Rohr durch Warmumformoperationen in die Geometrie des Abrollkolbens umgeformt ist.

7. Abrollkolben nach einem der Ansprüche 1 bis 4,
**dadurch gekennzeichnet, daß** das längsnahtgeschweißte Rohr durch Warmumformoperationen unter Innendruck in die Geometrie des Abrollkolbens umgeformt ist.

8. Abrollkolben nach einem der Ansprüche 1 bis 6,
**dadurch gekennzeichnet, daß** die Schweißnaht des Rohres eine Nahtüberhöhung zwischen - 0,1 und + 0,1 mm aufweist.

## Claims

1. An uncoiling piston for pneumatic spring systems, wherein the uncoiling piston is designed in the manner of a tube and consist of aluminium, **characterised in that** the uncoiling piston is a longitudinal seam welded tube which consists of an aluminium alloy.

2. The uncoiling piston according to Claim 1,
**characterised in that** the tube is longitudinal seam welded without additives.

3. The uncoiling piston according to Claim 1 or 2,
**characterised in that** the aluminium alloy is formed by a naturally hard alloy.

4. The uncoiling piston according to any one of Claims 1 to 3, **characterised in that** the wall thickness of the tube is 1.5 mm.

5. The uncoiling piston according to any one of Claims 1 to 4, **characterised in that** the longitudinal seam welded tube is transformed to the geometry of the uncoiling piston by retraction and expansion operations.

6. The uncoiling piston according to any one of Claims 1 to 4, **characterised in that** the longitudinal seam welded tube is transformed to the geometry of the uncoiling piston by hot transforming operations.

7. The uncoiling piston according to any one of Claims 1 to 4, **characterised in that** the longitudinal seam welded tube is transformed to the geometry of the uncoiling piston by hot transforming operations under internal pressure.

8. The uncoiling piston according to any one of Claims 1 to 6, **characterised in that** the welded seam of the tube has a seam elevation of between - 0.1 and + 0.1 mm.

## Revendications

1. Piston de déroulage pour systèmes de ressort pneumatique, dans lequel le piston de déroulage est formé comme un tuyau et est constitué d'aluminium, **caractérisé en ce que** le piston de déroulage est un tuyau soudé constitué d'un alliage d'aluminium.

2. Piston de déroulage, conformément à la revendication 1, **caractérisé en ce que** le tuyau est soudé sans un matériau additif.

3. Piston de déroulage, conformément à la revendication 1 ou 2, **caractérisé en ce que** l'alliage d'aluminium est constitué d'un alliage sans traitement thermique.

4. Piston de déroulage, conformément à l'une des revendications 1 à 3, **caractérisé en ce que** l'épaisseur de paroi du tuyau est de 1,5 mm.

5. Piston de déroulage, conformément à l'une des revendications 1 à 4, **caractérisé en ce que** le tuyau soudé est transformé moyennant des opérations de guidage et d'élargissement, dans la géométrie du piston de déroulage.

6. Piston de déroulage, conformément à l'une des revendications 1 à 4, **caractérisé en ce que** le tuyau soudé est transformé moyennant des opérations de forgeage à chaud, dans la géométrie du piston de déroulage.

7. Piston de déroulage, conformément à l'une des revendications 1 à 4, **caractérisé en ce que** le tuyau soudé est transformé moyennant des opérations de forgeage à chaud sous pression intérieure, dans la géométrie du piston de déroulage.

8. Piston de déroulage, conformément à l'une des revendications 1 à 6, **caractérisé en ce que** la soudure du tuyau présente une surépaisseur de soudure située entre -0,1 et + 0,1 mm.
